Europäisches Patentamt

European Patent Office

Office européen des brevets

(11) Publication number: **0 006 835**
A2

(12) **EUROPEAN PATENT APPLICATION**

(21) Application number: 79870016.7

(51) Int. Cl.³: **G 03 B 31/06**

(22) Date of filing: 25.06.79

(30) Priority: 29.06.78 GB 2834278

(71) Applicant: "GAF BELGIUM", N.V., 1 Industriepark, B-2700 Sint Niklaas (BE)

(43) Date of publication of application: 09.01.80 Bulletin 80/1

(72) Inventor: De Smet, Eric, Tulpenstraat 19, B-2700 Sint Niklaas (BE)

(74) Representative: DE BRABANTER, Maurice et al, Bureau VANDER HAEGHEN 63 Avenue de la Toison d'Or, B-1060 Bruxelles (BE)

(84) Designated Contracting States: BE DE FR GB IT NL SE

(54) Sound synchronized slide projector and sound synchronizing device for slide projectors.

(57) The invention relates to a sound synchronizing device suitable for being easily built in or connected to photographic slide projectors, comprising a continuous sine wave oscillator and a sine wave modificator, cooperating to generate a recordable signal, and a detector for sine wave signals, comprising a filtering device for the sine wave frequency generated by the sine wave oscillator, said detector being able to read, amplify and modify said signal, and thereby actuate the slide change control device of the slide projector.

The invention also relates to apparatuses for the projection of photographic slides, comprising such sound synchronizing device.

— 1 —

## SOUND SYNCHRONIZED SLIDE PROJECTOR AND SOUND SYNCHRONIZING DEVICE FOR SLIDE PROJECTORS

This invention relates to an apparatus for the projection of photographic slides, allowing the automatic synchronization of the slide change operation to sounds reproduced by a sound recording apparatus.

The invention also relates to a new sound synchronizing device suitable for being easily built in or connected to photographic slide projectors of various types.

There are presently known a wide variety of systems for synchronizing the projection of photographic slides to sounds reproduced during said projection by a sound recording and/or reproducing apparatus.

These known systems always involve external means for performing the synchronizing of a photographic slide projector on the one hand and a sound reproducing apparatus on the other hand.

Handling of such known systems is often rather complicated and/or impratical owing to the various connections that are to be established between the projector, the synchronizer and the sound apparatus, owing to the necessity of providing for each unit an individual power source or power source connection (mains or batteries) and owing to the space required by each individual element of the system, either for the installation or for the storing thereof.

There furthermore exists a wide variety of different types of projectors and sound apparatuses, complying with a diversity of more or less well defined standards, so that either the known synchronizing units had to be provided with a set of adaptors and selectors in order to make them suitable for different types of projectors and/or sound apparatuses, which resulted in rather complex and expensive synchronizers, or the known synchronizing units had to be kept simple, meaning that they could only be used in connection with a limited number of commercial projectors and sound apparatuses.

It is the purpose of this invention to provide an improved system allowing the automatic synchronization of the slide change operation of a photographic slide projector, to sounds reproduced by a sound apparatus, in particular by a tape recorder or cassette recorder, and avoiding the drawbacks of the known synchronizing systems.

According to the invention, there is therefore proposed a new apparatus for the projection of photographic slides, comprising a built in system for synchronizing the slide change with sounds reproduced by a sound recording apparatus used in connection with said slide projecting apparatus.

According to the invention, such a new apparatus comprises a built in sound synchronizer with a continuous sine wave oscillator and a sine wave modificator, cooperating to generate a recordable signal, and a dectector for sine wave signals, comprising a filtering device for the sine wave frequency generated by said sine wave oscillator, said detector being able to read, amplify and modify said signal, and thereby actuate the slide change control device of the slide projector.

Such apparatus has the great advantage that the frequency of the signal pulses generated by the sine wave oscillator/modificator device may be specifically selected.

Thus the signal to noise ratio of the signal pulses may be considerably improved, thanks to the filtering of mains and other random noises from that specific pulse signal frequency.

This greatly increases the reliability of the system and allows the use of a very wide variety of commercial tape and cassette recorders.

The sound synchronizing system in accordance with this invention, comprising a sine wave oscillator/modificator device may specifically be adapted to cooperate with a stereo sound recording apparatus, whereby one track of said stereo recording apparatus is used for recording and reproducing sound, whereas the other track is used for operating the slide change movement in synchronism with the recorded sound.

In such case the frequency of the signal pulses generated by the sine wave oscillator/modificator device may very suitably be selected in the range corresponding to the optimum recording/reproducing performances of the band width of current tape and cassette recorders, thus further increasing the reliability of the system.

In particular, the continuous sine wave oscillator may most appropriately be constructed to generate a sine wave having a frequency of about 1 kHz, whereby the pulse signal filter has a corresponding band pass at about 1kHz.

On the other hand this preferred embodiment of the sound synchronizing system may also be so adapted that it is able to cooperate indifferently with a stereo or mono sound recording apparatus.

In such case the frequency of the signal pulses generated by the sine wave oscillator/modificator device is suitably selected outside the audible sound frequency range, and the sine wave signal pulses may be recorded together with sound on the single track of a mono recorder or on both tracks of a stereo recorder.

During the reproduction of the recording, the audible sound frequencies are then filtered from the signal provided to the sound synchronizing system, by using a filter having a band pass corresponding to the frequency generated by the sine wave oscillator.

It is further possible, thanks to the specific sound synchronizer according to the invention, comprising a sine wave oscillator/modificator device, to relate the pulse
length of the signal generated by the sine wave oscillator/
modificator device, and therefore the pulse length of the
amplified signal used to trigger the slide change control
device during sound synchronized projection of the slides,
to the time that the slide change triggering control means
is actuated during the recording of the projection program.
It is thus possible to provide the slide projectors in
accordance with this embodiment of the invention, with a
wide variety of slide change mechanisms, only by suitably
adapting the amplifying and actuating performance of the
sine wave signal detector to the specific slide change
mechanism used.

According to a preferred embodiment of this invention,
the built in sound synchronizer of the apparatus for the
projection of photographic slides comprises :

- a continuous sine wave oscillator ;

- an operatable discontinuous sine wave generator
connected to the continuous sine wave oscillator, allowing
output signal modification ;

- a signal output which is connectable to the input
of a sound recording apparatus ;

- a signal input which is connectable to the output
of a sound recording apparatus ;

- a signal modification detector, comprising a filter
for the input signal and an amplifier for the filtered
input signal ;

- a power amplifier and actuator providing impulses
able to actuate the slide change mechanism of the slide
projector ;

- a stabilised power supply feeding said continuous
sine wave oscillator, said operatable discontinuous sine
wave generator, said signal modification detector, signal
filter and signal amplifier, and said power amplifier/
actuator.

Preferably, in this embodiment of the invention, the continuous sine wave oscillator is based on the principle of a "Wien bridge" and is built with an operational amplifier.

The slide projecting apparatus built in accordance with this embodiment of the invention constitues a most interesting novel realization, both in respect to its construction in itself and in respect to its manufacturing and material costs.

For this embodiment of the invention, the slide projecting part of the apparatus is very appropriately of the type in which the slide change mechanism is controlled by a cycle bobbin and the power amplifier and actuator of the sound synchronizer is adapted to actuate the cycle bobbin controlling the slide change mecanism.

It must however be clear that substantially any type of slide change mechanism may be used in the apparatuses in accordance with the preferred embodiments of the invention, and specifically in accordance with the most preferred embodiment of the invention, by merely adapting the signal amplifying and actuating means of the synchronizers signal detector, in particular the power amplifier/actuator, to the specific slide change control device used, for instance by suitably selecting relay devices for triggering said specific slide change control device.

According to a further feature of the invention, the slide projecting apparatus may also comprise, as a part of its sound synchronizing unit, a timer mechanism for controlling the slide change mechanism, said timer mechanism being fed by the stabilized power supply of the sound synchronizing system and being connected to the power amplifier and/or modifier.

Such construction is very interesting in view of the fact that the same stabilized power supply which is already required for the sound synchronizing function in the slide projecting apparatus may also be used for feeding this timer mechanism and in view of the fact that the power amplifier/ actuator which is already required for said sound synchronizing function may also be used for amplifying the timer signal to a signal pulse able to trigger the slide change control device of the projecting apparatus.

As stated hereabove, the general purpose of this invention is to provide an improved system for allowing the automatic synchronization of the slide change operation of a photographic slide projector, to sounds reproduced by a tape or cassette recorder.

According to the invention there is therefore further also proposed a new universal sound synchronizing device to be built in or connected to an apparatus for the projection of photographic slides, comprising a continuous sine wave oscillator and a sine wave modificator, cooperating to generate a recordable signal, and a detector for sine wave signals comprising a filtering device for the sine wave frequency generated by said sine wave oscillator, said detector being able to read, amplify and modify said signal and thereby actuate the slide change control device of the slide projector, to which said sound synchronizing system is to be associated.

Such universal sound synchronizing device according to this invention in fact corresponds to the sound synchronizing unit of the preferred embodiments of the apparatus for the projection of photographic slides, in accordance with this invention, as disclosed hereabove.

All features, preferred features and further embodiments of th sound synchronizing unit, stated hereabove in respect to the preferred embodiments of the projecting apparatus of this invention, do therefore also apply to or constitute the various embodiments of the new universal sound synchronizing device in accordance with this same invention.

More in particular these various embodiments of the new universal sound synchronizing device according to the invention may be built in, or used in connection with, photographic slide projectors equipped with substantially any type of slide change mechanism, by adapting the signal amplifying and modifying means of said synchronizing device to the specific slide change control device of the projector for which the considered synchronizer is used.

In the case of a universal sound synchronizing device in accordance with the invention, comprising a power amplifier/actuator, for providing the signal pulse able to trigger the slide change control device, which constitutes the most preferred embodiment of the synchronizing device according to the invention, the output of said power amplifier and actuator may be provided with suitable adapting means, such as appropriate relay devices, to allow triggering the specific control device of the slide change mechanism used.

The invention will now be described in greater detail having reference to the attached drawings, illustrating the most preferred embodiments of the sound synchronized slide projector and the sound synchronizing device in accordance with this invention.

In these drawings :

- figure 1 is a general schematic representation of such a preferred synchronizing device according to the invention (as it may be built in, in an apparatus according to the invention) ;

- figure 2 is a schematic representation of a specific construction of the preferred synchronizing device as represented more generally in figure 1.

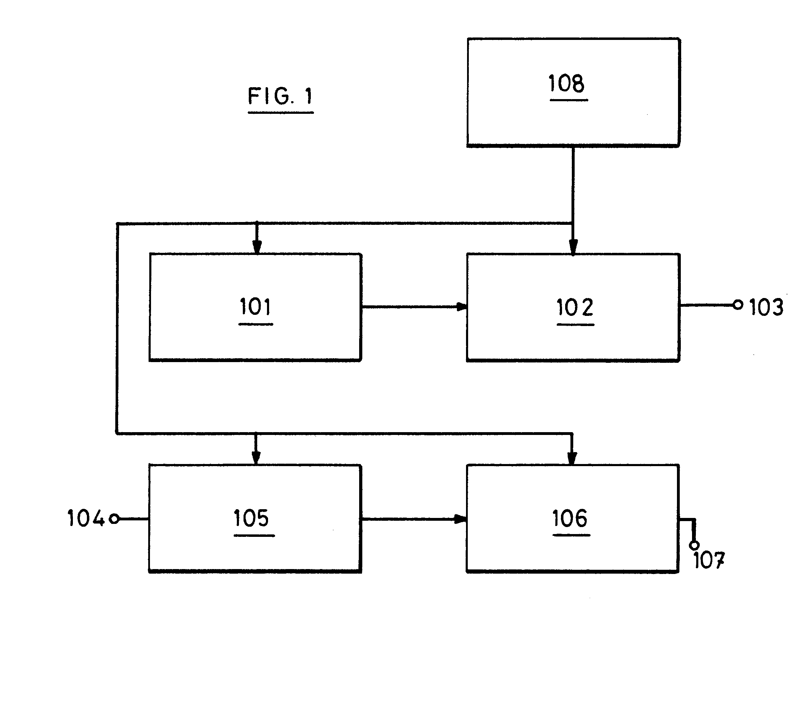

The sound synchronizing device represented very schematically in figure 1 comprises a continuous sine wave oscillator 101, based on the principle of a "Wien bridge" and built with an operational amplifier. This continuous sine wave oscillator 101 is connected to an operatable, discontinuous sine wave generating unit 102, able to cooperate with said continuous sine wave oscillator 101 to generate a discontinuous sine wave pulse signal to the signal output 103.

This signal output 103 is connected to the signal input of one track of a stereo recorder (not represented) during the recording cycle of the projection program. The duration of the discontinuous sine wave pulse signal generated by the discontinuous generator 102 is related to the time that the slide change movement control means of the projector is actuated during said recording cycle.

During the reproduction cycle of the projection program, the discontinuous sine wave pulse signal is reproduced from the "signal track" of a stereo recorder, to the signal input 104 of the synchronizing device. This signal input 104 is connected to a filtering-amplifying unit 105, built with an operational amplifier.

In this filtering-amplifying unit 105, the input signal pulses are first filtered over a band pass corresponding substancially to the frequency of the continuous sine wave oscillator 101, thus considerably improving the signal to noise ratio of the signal pulses. The filtered signal pulses are then amplified and fed to a power amplifier/actuator 106 providing a specific triggering signal to the output 107 to a slide change control device.

The continuous sine wave oscillator 101, the operatable discontinuous sine wave generator 102, the filtering/amplifying unit 105 and the power amplifier/actuator 106 are each fed from a common stabilized power supply 108, which is built with a fixed voltage regulator.

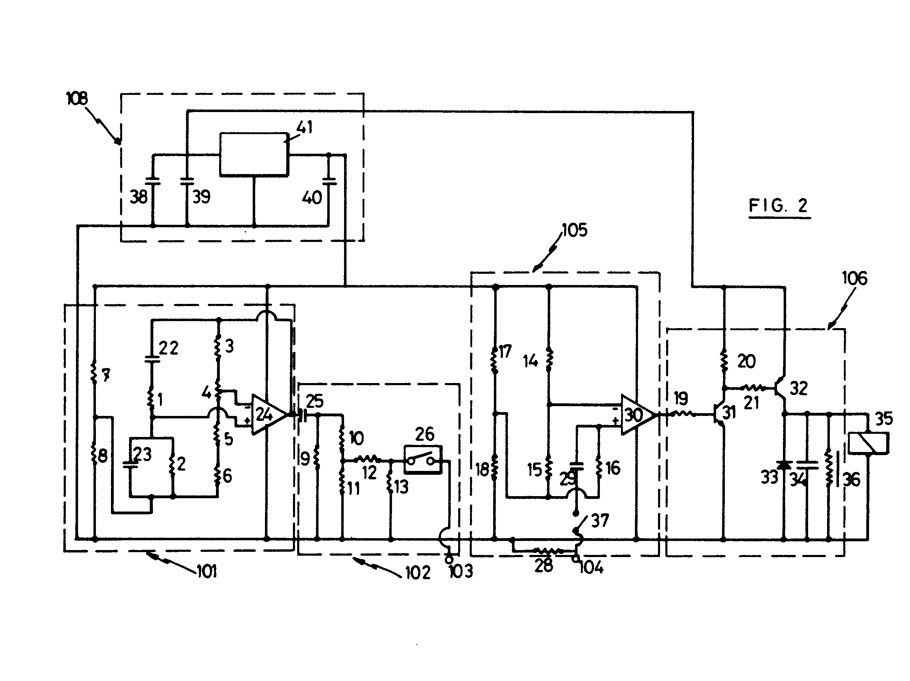

As illustrated in figure 2 the stabilized power supply 108 may in particular consist of an integrated circuit, fixed voltage regulator 41, connected with capacitors 38, 39 and 40 in the manner shown in said figure 2.

The continuous sine wave oscillator 101 built, as sated, with an operational amplifier, may in particular be constructed around an integrated circuit amplifier 24, which integrated circuit amplifier in fact serves as dual operation amplifier, in that it is also used as integrated circuit amplifier 30 for the filtering-amplifying unit 105.

As the central element of the continuous sine wave oscillator 101, this dual operation integrated circuit amplifier 24 (30) may in particular be included in a circuit construction as shown in figure 2, comprising various resistors 1,2,3,4,5,6,7 and 8, and capacitors 22 and 23.. As such this continuous sine wave oscillator 101 provides a continuous sine wave signal of a determinated frequency to the operatable discontinuous sine wave generating unit 102, which is capable of providing a discontinuous sine wave pulse signal to the signal output 103 when actuating the controlling contact 26 of a relay 35.

As shown in figure 2, the discontinuous sine wave generator 102 may in particular further consist of suitably connected capacitor 25, resistors 9,10,11,12 and 13 and actionable relay 26/35.

As already mentioned, the filtering-amplifying unit 105 is constructed around the dual operation integrated circuit amplifier 30 (24).

As the central element of the filtering-amplifying unit 105, the integrated circuit amplifier 30 (24) may in particular be included in a circuit construction as shown in figure 2, comprising various resistors 28,14,15,16,17 and 18, a capacitor 29 and a switch 37 setting the sound synchronizing device for the recording position or for the play back position (the recording position being represented in figure 2).

The filtering-amplifying unit 105 provides a filtered and amplified sine wave pulse signal to the power amplifier/ actuator 106.

As part of a universal sound synchronizing device in accordance with the invention, this power amplifier/actuator 106, may in particular comprise a transistor 31 and a power transistor 32, suitably included in a circuit construction as shown in figure 2, comprising resistors 19,20 and 21.

As a universal power amplifier/actuator, providing a pulse signal able to trigger the slide change control device of a slide projector, said power amplifier/actuator 105 may further comprise a diode 33 and a capacitor 34.

With the specific circuit construction as represented in figure 2, in which the actuating unit of the power amplifier/actuator 105 consists of a diode 33 and a capacitor 34, interconnected in the manner as shown, the sound synchronizing device in accordance with the invention is specifically adapted to trigger a slide change mechanism controlled by a cycle bobbin 36.

It must however be clear that th universal sound synchronizing device according to the invention is very easily adaptable for substantially any type of controlling systems for the slide change mechanism, by merely adapting the output relay device used for the actuating unit of the power amplifier/actuator 105.

It must further also be clear that the invention is by no means limited to the specific embodiments thereof disclosed hereabove; many modifications to these specific embodiments will indeed readily appear to the skilled art man without leaving the scope of the invention as disclosed in the claims following hereafter, and such modifications of course fall within the claimed ambit of the invention.

0006835

## CLAIMS

1. Apparatus for the projection of photographic slides, comprising a built in sound synchronizer with a continuous sine wave oscillator and a sine wave modificator, cooperating to generate a recordable signal, and a detector for sine wave signals, comprising a filtering device for the sine wave frequency generated by said sine wave oscillator, said detector being able to read amplify and modify said signal and thereby actuate the slide change control device of the slide projector.

2. Apparatus for the projection of photographic slides according to claim 1, in which the built in sound synchronizer comprises :

- a continuous sine wave oscillator ;
- an operatable discontinuous sine wave generator connected to the continuous sine wave oscillator, allowing output signal modification ;
- a signal output which is connectable to the input of a sound recording apparatus ;
- a signal input which is connectable to the output of a sound recording apparatus ;
- a signal modification detector, comprising a filter for the input signal and an amplifier for the filtered input signal ;
- a power amplifier and actuator providing impulses able to actuate the slide change mechanism of the slide projector ;
- a stabilized power supply feeding said continuous sine wave oscillator, said operatable discontinuous sine wave generator, said signal modification detector, signal filter and signal amplifier, and said power amplifier/actuator.

3. Apparatus for the projection of photographic slides, according to claim 1 or 2, in which the continuous sine wave oscillator is based on the principle of a "Wien bridge" and is built with an operational amplifier.

0006835

4. Apparatus for the projection of photographic slides, according to any one of the preceeding claims, in which the built in sound synchronizer is adapted to cooperate with a stereo sound recording apparatus, whereby one track of said stereo recording apparatus is used for recording and reproducing sound whereas the other track is used for operating the slide change movement in synchronism with the recorded sound, and whereby the frequency of the signal pulses generated by the sine wave oscillator/modificator device are selected in the range corresponding to the optimum recording/reproducing performances of the band width of current tape and cassette recorders.

5. Apparatus for the projection of photographic slides, according to claim 4, in which the sine wave oscillator/modificator device generates a sine wave having a frequency of about 1 kHz, whereby the input signal filter device has a corresponding selective band pass at about 1 kHz.

6. Apparatus for the projection of photographic slides, according to any one of claim 1 to 3, in which the built in sound synchronizer is adapted to cooperate indifferently with a mono or with a stereo sound recording apparatus, whereby the frequency of the signal pulses generated by the sine wave oscillator/modificator device is selected outside the audible sound frequency range and whereby the sine wave signal pulses are recorded together with sound on the single track of a mono recorder or on both tracks of a stereo recorder.

7. Apparatus for the projection of photographic slides, according to claim 6, in which the input signal filter device has a band pass corresponding to the frequency generated by the sine wave oscillator, thus filtering out the audible sound frequencies from the reproduced signal provided to the sound synchronizer.

8. Apparatus for the projection of photographic slides, according to any one of claims 2 to 7, in which the slide change mechanism is controlled by a cycle bobbin and the power amplifier/actuator of the sound synchronizer is adapted to actuate such cycle bobbin controlling the slide change
mechanism.

9. Apparatus for the projection of photographic slides
according to any one of claims 2 to 8, further comprising
a timer mechanism for controlling the slide change mechanism, said timer mechanism being fed by the stabilized
power supply of the sound synchronizing system and being
connected to the power amplifier/actuator of said sound
synchronizing system.

10. Universal sound synchronizing device to be built
in or connected to an apparatus for the projection of photographic slides, comprising a continuous sine wave oscillator and a sine wave modificator, cooperating to generate
a recordable signal, and a detector for sine wave signals,
comprising a filtering device for the sine wave frequency
generated by said sine wave oscillator, said detector being
able to read, amplify and modify said signal and thereby
actuate the slide change control device of the slide projector, to which said sound synchronizing system is to be
associated.

11. Universal sound synchronizing system according to
claim 10, comprising :

- a continuous sine wave oscillator ;
- an operatable discontinuous sine wave generator
connected to the continuous sine wave oscillator, allowing
output signal modification ;
- a signal output which is connectable to the input of
a sound recording apparatus ;
- a signal input which is connectable to the output of
a sound recording apparatus ;
- a signal modification detector comprising a filter
for the input signal and an amplifier for the filtered
input signal ;
- a power amplifier and actuator providing impulses able
to actuate the slide change mechanism of the slide projector;
- a stabilized power supply feeding said continuous sine
wave oscillator, said operatable discontinuous sine wave

0006835

generator, said signal modification detector, signal filter and signal amplifier, and said power amplifier/actuator.

12. Universal sound synchronizing device, according to claim 10 or 11, in which the continuous sine wave oscillator is based on the principle of a "Wien bridge" and is built with an operational amplifier.

13. Universal sound synchronizing device according to any one of claims 10 - 12, adapted to cooperate with a stereo sound recording apparatus, whereby one track of said stereo recording apparatus is used for recording and reproducing sound whereas the other track is used for operating the slide change movement in synchronism with the recorded sound, and whereby the frequency of the signal pulses generated by the sine wave oscillator/modificator device are selected in th range corresponding to the optimum recording reproducing performances of the band width of current tape and cassette recorders.

14. Universal sound synchronizing device according to claim 13, in which the sine wave oscillator/modificator device generates a sine wave having a frequency of about 1 kHz, whereby the input signal filter device has a corresponding selective band pass about 1 kHz.

15. Universal sound synchronizing device according to any one of claims 10 - 12, adapted to cooperate indifferently with a mono or with a stereo sound recording apparatus, whereby the frequency of the signal pulses generated by the sine wave oscillator/modificator device is selected outside the audible sound frequency range and whereby the sine wave signal pulses are recorded together with sound on the single track of a mono recorder or on both tracks of a stereo recorder.

16. Universal sound synchronizing device according to claim 15, in which the input signal filter has a band pass corresponding to the frequency generated by the sine wave oscillator, thus filtering out the audible sound frequencies from the reproduced signal provided to the sound synchronizer.

17. Sound synchronizing device according to any one of claims 11 - 16, in which the output of the power amplifier/actuator is provided with adapting means allowing it to actuate the specific control device of the slide change mechanism to which said synchronizing system is to be associated.

18. Universal sound synchronizing device according to any one of claims 11 - 17, further comprising a timer mechanism for controlling the slide change mecanism of the slide projector to which said sound synchronizing device is to be associated, said timer mechanism being fed by the stabilized power supply of the sound synchronizing device and being connected to the power amplifier/actuator thereof.

FIG. 1

FIG. 2

2/2

0006835